# EUROPEAN PATENT APPLICATION

(11) **EP 4 276 352 A1**
(43) Date of publication of application: **15.11.2023**
(21) Application number: 21917581.7
(22) Date of filing: 18.11.2021
(51) Int. Cl.: F21Y 115/10, F21S 2/00, G01N 21/84

(54) **LIGHT IRRADIATION DEVICE**

(30) Priority: 07.01.2021 JP 2021001373
(71) Applicant: CCS Inc., Kyoto-shi, Kyoto 602-8011 (JP)
(72) Inventor: MOTOIE, Yoshiki, Kyoto-shi, Kyoto 602-8011 (JP)
(74) Representative: Müller Hoffmann & Partner
(86) International application number: PCT/JP2021/042444
(87) International publication number: WO 2022/149356

(57) **Abstract**

Provided is a light irradiation device 100 comprising: a light guide plate 1 that reflects light introduced inside from a side peripheral surface 1a off a front surface 1b and emits it from a rear surface 1c; a light source that irradiates light through the side peripheral surface 1a of the light guide plate 1 to an inside thereof; and a frame 3 that supports the light guide plate 1 and the light source, the frame 3 comprising a ring-shaped frame main body 31 arranged around a perimeter of the light guide plate 1 and a first flange portion 32 extending inwardly from a rear surface 1c side of the frame main body 31, a peripheral edge portion of the light guide plate 1 being arranged atop the first flange portion 32, wherein not only is rattling and displacement of the light guide plate 1 suppressed, but also accidental reflected light from the rear surface 1c of the light guide plate 1. A translucent sheet 5 with minute recesses and protrusions 5a formed on its surface 1b is affixed to the rear surface 1c of the light guide plate 1, so as to extend to between the light guide plate 1 and the first flange portion 32.

## Description

### Technical Field

The present invention relates to a light irradiation device used for surface inspection of a target object (workpiece) or the like, and particularly relates to one configured such that light introduced from a side peripheral surface of a light guide plate to an inside thereof is reflected by its front surface and emitted from its rear surface.

### Background Art

As shown in Patent Literature 1, a light irradiation device of this type is known in which a large number of minute reflective portions are provided on the front surface of a light guide plate, and light introduced inside from the side peripheral surface of the light guide plate is diffusely reflected by said reflective portions and emitted from the rear surface to the outside.

This type of light irradiation device illuminates the workpiece by the workpiece being placed on the rear surface side of the light guide plate, and moreover allows the workpiece to be inspected through the light guide plate by means of a camera or the like arranged on a front surface side of the light guide plate. During this, the large number of reflective portions provided on the light guide plate are not captured by the camera. This is because these reflective portions are extremely small, in addition to the focus of the camera being set to be on the surface of the workpiece.

The light guide plate described above is held around its perimeter by a frame. More specifically, the frame is provided with a pair of upper and lower flanges extending inwardly, and a peripheral edge portion of the light guide plate is sandwiched between the upper and lower flanges in the thickness direction.

Furthermore, it is configured such that LED light sources are held on the inner peripheral surface of the frame so as to face the side peripheral surface of the light guide plate, and the light from the LEDs is introduced through the side peripheral surface of the light guide plate into an inside thereof.

Incidentally, because the light guide plate expands due to the generation of heat and the like by the LEDs when the LEDs are turned on, a gap is provided between the side peripheral surface of the light guide plate and the LEDs or the inner peripheral surface of the frame to establish an extension margin for the light guide plate.

However, due to this gap being provided, the light guide plate may slide and rattle or change its position and the like. Further, as a result of this, there is a danger that the distance between the LEDs and the light guide plate side peripheral surface may change, that the light guide plate rear surface edge portion may be damaged deteriorating the optical performance, that nonuniformity of the luminosity of the light guide plate rear surface may occur, and so on.

On the other hand, for this type of light irradiation device, there are cases in which accidental reflection occurs on the rear surface of the light guide plate and the reflected light is captured by the camera, adversely affecting the inspection.

### Prior Art Literature

### Patent Literature

Patent Literature 1: International Publication No. WO2007/023894

### Summary of Invention

### Problem to be Solved by the Invention

Accordingly, the present invention is intended to solve the above problems at once with a simple configuration, and for this type of light irradiation device having a light guide plate, not only is rattling and displacement of the light guide plate suppressed, but also accidental reflected light from light guide plate rear surface.

### Means for Solving the Problem

That is, a light irradiation device according to the present invention is a light irradiation device which includes a light guide plate that reflects light introduced inside from a side peripheral surface off a front surface and emits it from a rear surface, a light source that irradiates light through the side peripheral surface of the light guide plate to an inside thereof, and a frame that supports the light guide plate and the light source, wherein the frame includes a ring-shaped frame main body arranged around a perimeter of the light guide plate and a first flange portion extending inwardly from a rear surface side of the frame main body, a peripheral edge portion of the light guide plate being arranged atop the first flange portion. Furthermore, the light irradiation device is characterized in that it also includes a translucent sheet with minute recesses and protrusions formed on its surface, the sheet is affixed to the rear surface of the light guide plate, and its affixing area extends to the peripheral edge portion of the light guide plate.

With such a configuration, not only is accidental reflection of light from the light guide plate rear surface suppressed by the minute recesses and protrusions formed on the sheet, but it is also possible to reduce or suppress sliding of the light guide plate and the rattling caused by it since the minute recesses and protrusions of the sheet affixed to the rear surface of the light guide plate contact the surface of the first flange portion and the minute recesses and protrusions exert an anti-slip function.

In order to securely hold the light guide plate by the frame, it is preferrable that the frame further include a second flange portion extending inwardly from an upper portion of the frame main body and that the peripheral edge portion of the light guide plate is held so as to be sandwiched from the front and rear by the second flange portion and the first flange portion.

The effects of the present invention are exhibited more remarkably if it is configured such that a large number of minute reflective portions are provided on the front surface of the light guide plate, and light introduced into the inside of the light guide plate is reflected by the reflective portions and emitted from the rear surface.

Specific embodiments can be given such as one configured such that the light guide plate is formed in a rectangular shape and light is introduced from all four side peripheral surfaces of the light guide plate into an inside thereof, and one wherein the light source is an LED and a plurality of LEDs are held so as to be aligned in the frame.

### Effects of the Invention

With a light irradiation device having such a configuration, it is possible to prevent a change in the luminance of the light guide plate rear surface (the light emitting surface) due to a change in the position of the light guide plate or damage to the light guide plate rear surface edge portion, and beyond that it is also possible to prevent accidental reflection by the rear surface of the light guide plate from occurring and said reflected light being captured by the camera and adversely affecting the inspection.

### Brief Description of Drawings

(FIG 1) Figure 1 is a perspective view which shows the light irradiation device according to this embodiment, and an inspection system containing the same.
(FIG 2) Figure 2 is an exploded view diagram of the light irradiation device according to the same embodiment.
(FIG 3) Figure 3 is a sectional view of the light irradiation device according to the same embodiment.
(FIG 4) Figure 4 is an enlarged sectional view of the light irradiation device according to the same embodiment.
(FIG 5) Figure 5 is an enlarged sectional view of the light irradiation device according to the same embodiment which has been enlarged further.

### Explanation of Reference Signs

- 100: light irradiation device
- 1: light guide plate
- 1a: side peripheral surface
- 1b: front surface
- 1c: rear surface
- 1d: reflective portions
- 22: LEDs (light source)
- 3: frame
- 31: frame main body
- 32: first flange portion
- 33: second flange portion
- 5: sheet
- 5a: recesses and protrusions

### Modes for Carrying Out the Invention

A light irradiation device 100 according to a first embodiment of the present invention is explained below with reference to the drawings.

This light irradiation device 100 irradiates a prescribed light onto a workpiece W which is the inspection target, and is used in an inspection system S which inspects and discriminates surface defects of the workpiece W, characters written on the workpiece W, and the like.

Before a concrete explanation of the light irradiation device 100, a simple explanation of the inspection system S will first be provided.

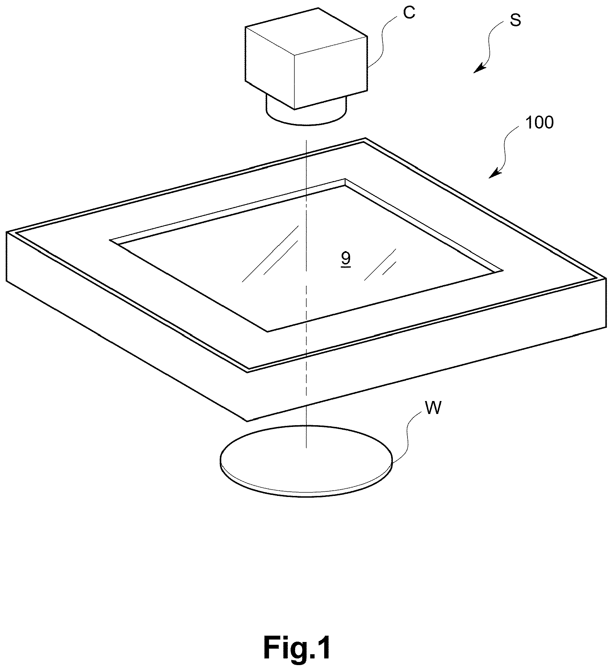

As shown in FIG 1, the inspection system S includes the light irradiation device 100 that irradiates light onto the workpiece W which is the inspection target, a camera C installed on an opposite side to the workpiece W sandwiching the light irradiation device 100 which takes an image of workpiece W through a translucent window 9 provided in the light irradiation device 100, an image processing device (not shown) which processes image data output from the camera C and detects defects and the like, and so on.

Returning to the main topic, the light irradiation device 100 will be explained.

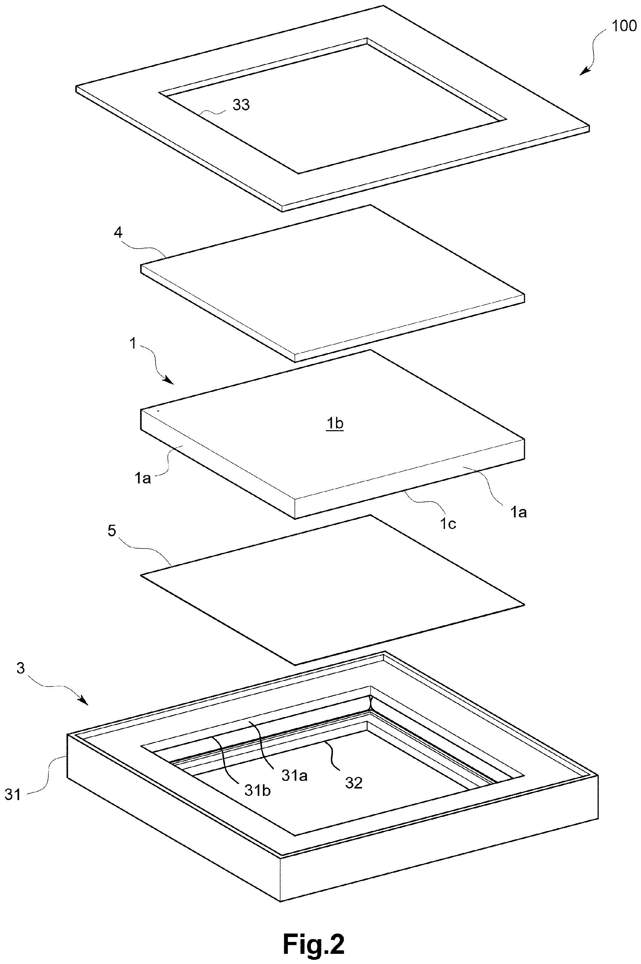

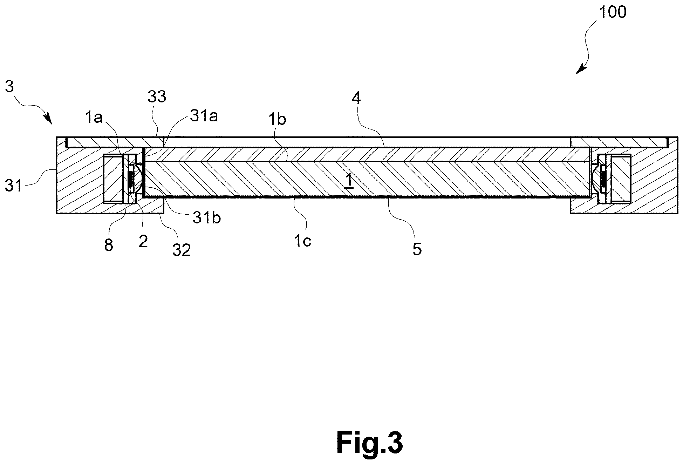

As shown in FIG 2 and FIG 3 and the like, the light irradiation device 100 includes a light guide plate 1 which reflects light introduced inside from side peripheral surface 1a off of its front surface 1b and emits it out of its rear surface 1c, LEDs 2 which are a light source which irradiates light onto side peripheral surface 1a of light guide plate 1, and a ring-shaped frame 3 which holds the light guide plate 1 and the LEDs 2.

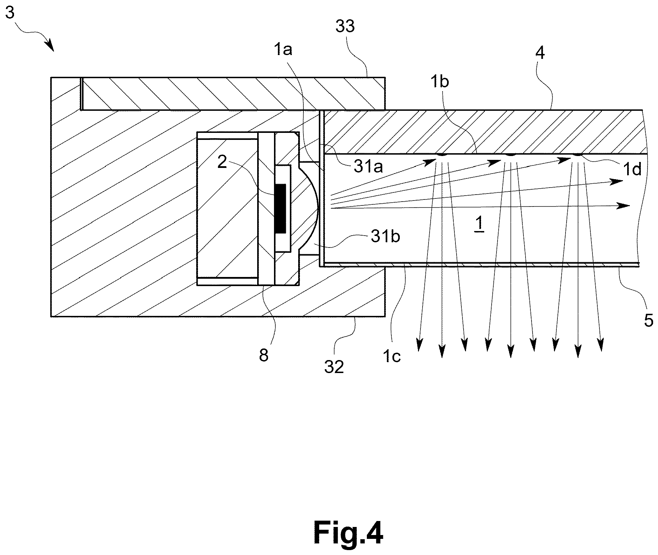

The light guide plate 1 is made of transparent resin in the shape of a rectangular (more specifically, square) flat plate and, as shown in FIG 4, a plurality (a large number) of minute reflective portions 1d are provided on its front surface 1b. Here, the reflective portions 1d are, for example, minute scratches or recesses formed on the light guide plate front surface 1b, and when the light introduced into the inside of the light guide plate 1 hits them, it is diffusely reflected toward the rear surface 1c of the light guide plate. Moreover, these reflective portions 1d may be formed, for example, by printing dots of pigment on the light guide plate front surface 1b.

The LEDs 2 are of the surface-mounted type, and here, as shown in FIG 3, a plurality of LEDs 2 are equipped in a row at regular intervals along the longitudinal direction of a wiring board 8 having a straight belt shape. Furthermore, the board 8 which is equipped with the plurality of LEDs 2 in this way is arranged in order to respectively face each side peripheral surface 1a of the light guide plate 1.

As shown in FIG 2 and FIG 3, the frame 3 includes a rectangular ring-shaped frame main body 31, as well as a first flange portion 32 and a second flange portion 33 which respectively extend inwardly a predetermined distance from the rear surface side and the front surface side of the frame body 31.

The frame main body 31 is arranged around the light guide plate 1 such that its inner peripheral surface 31a faces side peripheral surface 1a of the light guide plate 1. A groove 31b is formed on the inner peripheral surface 31a of frame main body 31, and the board 8 on which the LEDs 2 are mounted is accommodated in the groove 31b, and it is arranged such that the light from the LEDs 2 is irradiated onto the side peripheral surface 1a of the light guide plate 1 as explained above. Moreover, a gap is provided between the side peripheral surface 1a of the light guide plate 1 and the inner peripheral surface 31a of the frame main body 31, and an extension margin is established for the extension of light guide plate 1 due to heat generated from the LEDs 2 or heat generated by being illuminated by the LEDs 2 or the like when the LEDs 2 are turned on.

The first flange portion 32 is a flat plate of equal thickness with a rectangular ring shape, and is provided integrally with the frame main body 31.

The second flange portion 33 is a flat plate of equal thickness with a rectangular ring shape, and is detachably secured to the front surface side of the frame main body 31 via a screw or the like. Moreover, each window formed by being surrounded by the inner peripheral edges of the first flange portion 32 and the second flange portion 33 is previously-mentioned translucent window 9.

Furthermore, a peripheral edge portion of the light guide plate 1 is held sandwiched from the front and rear by the first flange portion 32 and the second flange portion 33. Moreover, in the figures, reference number 4 denotes a transparent protective cover attached to the front surface 1b of the light guide plate 1

Furthermore, as shown in FIGs 2 - 5, in this embodiment a rectangular sheet 5 with minute recesses and protrusions 5a formed on its surface is affixed to the entire surface of the rear surface 1c of light guide plate 1. The minute recesses and protrusions 5a of this embodiment are formed such that half-ellipsoid shaped protrusions are arranged side by side. Moreover, their shape may be hemispherical, conical, or pyramidal, etc., and their size may be any size as long as they can suppress reflection according to the wavelength of the light. Additionally, because the focus of the camera C is set on the surface of workpiece W, the minute recesses and protrusions 5a are not captured by the camera, and, conversely, the size of the minute recesses and protrusions 5a is limited to a size that is not captured when they are in an out-of-focus state.

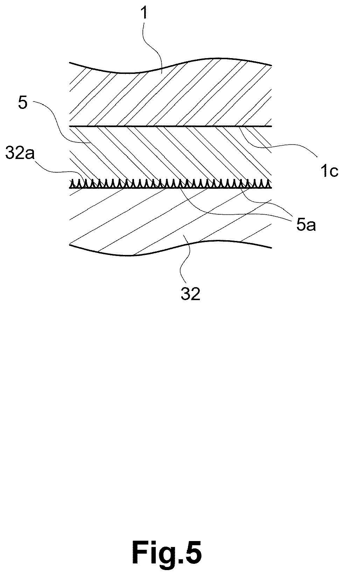

Furthermore, with such a configuration, because accidental reflection of light from the light guide plate rear surface 1c is suppressed by the minute recesses and protrusions 5a formed on the sheet 5, not only does inspection accuracy of the workpiece W by the camera improve, but, since the sheet 5 is sandwiched between the light guide plate 1 and the first flange portion 32 and, as shown in FIG 5, the recesses and protrusions 5a are in contact with front surface 32a of the first flange portion 32 and exert an anti-slip function, it is possible to reduce or suppress sliding and rattling and the like of the light guide plate 1 caused by the gap.

Moreover, the present invention is not limited to the embodiment described above.

For example, the sheet may be interposed between the light guide plate and the first flange portion, and does not necessarily have to be affixed to the entire light guide plate rear surface. For example, there may be a region of the peripheral edge portion on the light guide plate rear surface in which the sheet is not affixed.

Further, the light irradiation device 100 of the above embodiment has a rectangular shape, but, for example, a disk-shaped light irradiation device may also be applicable.

In addition, the present invention is not limited to the above-described embodiments, and it goes without saying that various modifications are possible without departing from the spirit of the present invention.

### Industrial Applicability

According to the present invention, it is possible to prevent a change in the luminance of the light guide plate rear surface (the light emitting surface) due to a change in the position of the light guide plate, damage to the light guide plate rear surface edge portion, and so on, and beyond that it is also possible to prevent accidental reflection by the rear surface of the light guide plate from occurring and said reflected light being captured by the camera and adversely affecting the inspection.

## Claims

1. A light irradiation device, comprising:
a light guide plate that reflects light introduced inside from a side peripheral surface off a front surface and emits it from a rear surface,
a light source that irradiates light through the side peripheral surface of the light guide plate to an inside thereof, and
a frame that supports the light guide plate and the light source, wherein
the frame comprises a ring-shaped frame main body arranged around a perimeter of the light guide plate and a first flange portion extending inwardly from a rear surface side of the frame main body, a peripheral edge portion of the light guide plate being arranged atop the first flange portion,
the light irradiation device further comprises a translucent sheet with minute recesses and protrusions formed on its surface, and
the sheet is affixed to the rear surface of the light guide plate, and its affixing area extends to the peripheral edge portion of the light guide plate.

2. The light irradiation device according to claim 1, wherein the frame further comprises a second flange portion extending inwardly from an upper portion of the frame main body and the peripheral edge portion of the light guide plate is held so as to be sandwiched from the front and rear by the second flange portion and the first flange portion.

3. The light irradiation device according to claim 1, wherein a large number of minute reflective portions are provided on the front surface of the light guide plate, and light introduced into the inside of the light guide plate is reflected by the reflective portions and emitted from the rear surface.

4. The light irradiation device according to claim 1, wherein the light guide plate is formed in a rectangular shape and light is introduced from all four side peripheral surfaces of the light guide plate into an inside thereof.

5. The light irradiation device according to claim 1, wherein the light source is an LED and a plurality of LEDs are held so as to be aligned in the frame.
